Europäisches Patentamt

European Patent Office

Office européen des brevets

(19)

(11) Publication number: **0 228 247 B1**

(12) **EUROPEAN PATENT SPECIFICATION**

(45) Date of publication of patent specification: **18.12.91**  (51) Int. Cl.⁵: **H01T 19/00, B29C 59/10**

(21) Application number: **86309876.0**

(22) Date of filing: **17.12.86**

(54) Corona discharge treating system.

(30) Priority: **25.12.85 JP 295327/85**
**25.12.85 JP 295328/85**
**25.12.85 JP 295329/85**
**25.12.85 JP 295330/85**
**25.12.85 JP 295331/85**

(43) Date of publication of application:
**08.07.87 Bulletin 87/28**

(45) Publication of the grant of the patent:
**18.12.91 Bulletin 91/51**

(84) Designated Contracting States:
**DE FR GB IT**

(56) References cited:
**EP-A- 0 219 679**      **DE-A- 3 400 325**
**DE-B- 1 208 629**      **US-A- 3 102 193**
**US-A- 3 183 352**      **US-A- 3 655 966**

(73) Proprietor: **Nippon Paint Co., Ltd.**
**2-1-2, Oyodokita Oyodo-ku**
**Osaka-shi Osaka-fu(JP)**

(72) Inventor: **Tsutsui, Koichi**
**5-chome, 13-4, Osumigaoka Tanabe-cho**
**Tsuzuki-gun Kyoto(JP)**
Inventor: **Ikeda, Shoji**
**2-503, 67, Nishimachi Ikaga**
**Hirakata Osaka(JP)**

(74) Representative: **Brereton, Paul Arthur et al**
**REDDIE & GROSE 16 Theobalds Road**
**London WC1X 8PL(GB)**

Rank Xerox (UK) Business Services

## Description

The present invention relates to a corona discharge treating system for improving the surface property of an article by activating its surface.

Japanese Patent Publication (examined) No. 60-46133 discloses a technique related to a corona discharge treating apparatus. This apparatus for treating an article with corona discharge is designed for articles having a large number of surfaces to be treated. A base electrode is installed on a transfer means, in the form of a conveyor belt; an article is mounted on this base electrode and a fibrous (brushlike) discharge electrode (counter electrode) is arranged thereabove.

What is characteristic of this prior art is that all surfaces of a complicated shape of article with many surfaces are concentrically subjected to discharge treatment together by a base electrode and a discharge electrode. Accordingly, in order to ensure the discharge treatment, it is necessary to perform the discharge treatment in such a manner that the article is stopped once at a position where the discharge electrode is located, and then the article is moved as slow as possible. A problem with such known treating apparatus, however, is that the discharge treatment cannot be performed efficiently and is therefore not suitable for mass-production.

Our European Patent Application No. 85305345.2 also discloses a technique relating to corona discharge. The apparatus comprises an excitation electrode and a counter electrode opposed to the excitation electrode, with a conductive and flexible contact piece provided on either one of them. This prior art is designed to provide stable and uniform treatment of an article with a complicated shape, but does not enable efficient surfaced treatment by assembly-line operation on products having a large number of surfaces to be treated.

Similarly, our Japanese Patent Application No. 59-237735 (publication no. 61-118136) discloses a method of performing a surface treatment in which high voltage is applied between an excitation electrode and a counter electrode, thereby forming a discharge region between these two electrodes. Gas is then supplied into this discharge region to treat the surfaces of the articles. This process is intended to improve discharge treatment efficiency by the supply of gas, but still does not teach a method of effecting surface treatment of products of complicated shape in large quantities.

DE-A-3400325 describes a corona discharge treating system comprising a plurality of treating zones. Each zone has at least one discharge electrode and is provided for treating different parts of a surface of an article to be treated. The article is conveyed by conveying means such that different parts of the article can be treated sequentially. The article is in each zone in contact with a base electrode and high voltage is applied between the base electrode and a suspended electrode which makes contact with the surface to be treated to perform corona discharge in order to treat a part of the surface to be treated. The conveying means convey the article from one treatment zone where one part of the surface is treated to the next zone where another part of its surface is treated.

EP-A-0219679 describes a corona discharge treatment system in which the discharge electrode is a suspended electrode having a plurality of electrode pieces suspended from an electrode fitting member. The electrode pieces have different lengths and are arranged in order to from short to long ones or in the form of a wavy pattern.

A suspended electrode is not very efficient at treating side surfaces of an article to be treated. For these surfaces the article must be fitted so that the side surfaces are exposed upwardly. If the surface has a complicated shape with recesses and overhangs the suspended electrodes may have difficulty in making contact with all the surface areas that it is desired to treat.

According to the present invention there is provided a corona discharge treating system comprising: a plurality of treating zones, each treating zone being provided for treating different parts of a surface of an article to be treated, each treating zone having at least one discharge electrode (6); conveying means (1) for conveying articles between the treating zone; and a base electrode (3) coming in contact with the article to be treated in each treating zone, wherein high voltage is applied between said base electrode (3) and said discharge electrode (6) to perform corona discharge in each treating zone to activate a part of the surface of the article to be treated, said conveying means (1) conveying the article, whose part of the surface is activated, to a next treating zone to activate anther part of the surface of the article; characterised in that at least one of the discharge electrodes is a rotary discharge electrode (9) having a large number of conductive electrode pieces (10) implanted like a brush in the outer circumference of the rotary member.

In accordance with the invention rotary electrodes may be used together with suspended electrodes.

Embodiments of the invention will now be described by way of example, with reference to the accompanying drawings, in which:-

FIG 1 shows a perspective view of corona discharge treating system according to the invention;

FIG 2 is a plan view of the system of FIG 1;

FIG 3 is a front view showing the end treating zone of FIG 1;

FIG 4 is a front view of a rotary discharge electrode, partly in section;

FIG 5 is a front view showing the details of the plied construction of an electrode piece to be implanted in the discharge electrode;

FIG 6(a) is an explanatory diagram showing how electrode pieces are implanted in a rotary body;

FIG 6(b) is an explanatory diagram showing the rotary body formed by combination of spiral shape members to provide a structure adapted to hold the electrode pieces;

FIG 6(c) is an enlarged view of the part L indicated in FIG 6(b):

FIG 7 is a perspective view of a rotary discharge electrode in its installed state;

FIG 8 is a wiring diagram of a rotary discharge electrode and a base electrode;

FIG 9 is a plan view showing another embodiment of the invention in which the upper and side treatment zones are combined;

FIG 10 is a front view to explain the setting of the spiral pitch;

FIG 11 is a side view to explain the effective treating range along the rotating direction;

FIG 12(a) is a side view of a rotary discharge electrode provided with electrode pieces differing in length around its circumference;

FIG 12(b) is a front view of the electrode of FIG 12(a);

FIG 13 is a partial side view of a bumper used in making comparison of peel strengths obtained using two different types of discharge electrode;

FIG 14 is a partial plan view of the same, as seen from above;

FIG 15 is a perspective view illustrating a suspended electrode;

FIG 16 is a diagram of the wiring between the suspended discharge electrode and the base electrode;

FIG 17 is an enlarged perspective view of the suspended discharge electrode;

FIG 18 is a side view illustrating electrode pieces in a stepped arrangement;

FIG 19 is a side view showing electrode pieces in a level arrangement;

FIG 20 is a perspective view of electrode pieces in a staggered arrangement;

FIG 21 is a side view of electrode pieces in a wavy arrangement;

FIG 22 is a side view of a vibrator;

FIG 23 is a plan view of the same;

FIG 24 is an enlarged front view of the principal part of the corona discharge treating apparatus of Figs 16 to 23;

FIG 25 is a side view of the above-mentioned part;

FIG 26 is a perspective view showing another example of suspended discharge electrode of the corona discharge creating apparatus of this invention; and

FIG 27 is a perspective view of another embodiment of rotary discharge electrode.

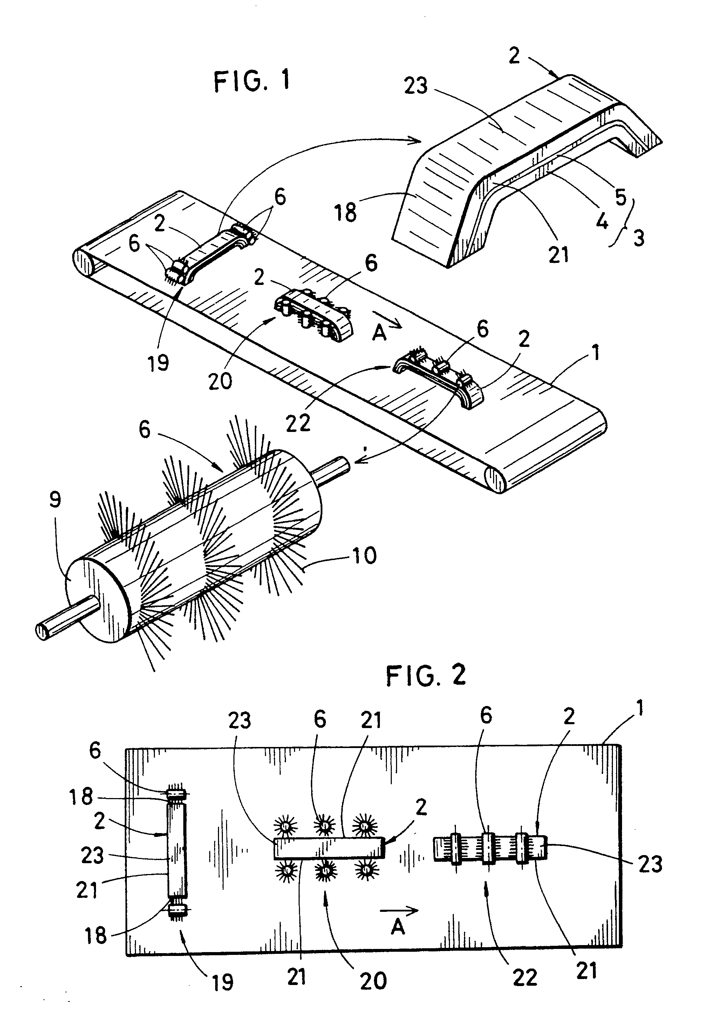

FIGS 1 to 3 illustrate a corona discharge treating system according to an embodiment of this invention. This corona discharge treating system comprises a conveyor 1 to convey articles carried thereon. In this example, the article 2 is an automobile bumper made of polyolefin resin material which has a large number of surfaces to be treated which face in different directions. The conveyor 1 is a conveyor belt, with the arrow A showing the direction of movement.

A base electrode 3 is installed on the conveyor 1 and the article 2 is then mounted thereon. The base electrode 3 has a surface configuration matching the inside surface configuration of each article 2 so as to be in contact therewith. This base electrode 3 comprises a plastic moulding 4 and a conductive metal layer 5 formed by applying a conductive coating on the surface of the moulding adjacent the article. The conductive coating is applied by electroless plating. However, the invention is not limited to the method: other methods of applying conductive coatings such as vapor deposition or pasting an aluminum foil or conductive tape, or the like, may be used. The base electrode may, for example, be composed of a conductive moulding of aluminum or other conductive material.

As seen from the drawing, the corona discharge treasting system is equipped with a plurality of rotary discharge electrodes 6 stationed along the direction of movement A of the conveyor 1. Each of these rotary discharge electrodes 6 activates a part of the surface to be treated of the article, and is disposed in one of three groups each comprising several electrodes. Different treating zones 19, 20, 22 are respectively formed by the regions where the respective groups of rotary discharge electrodes 6 are located.

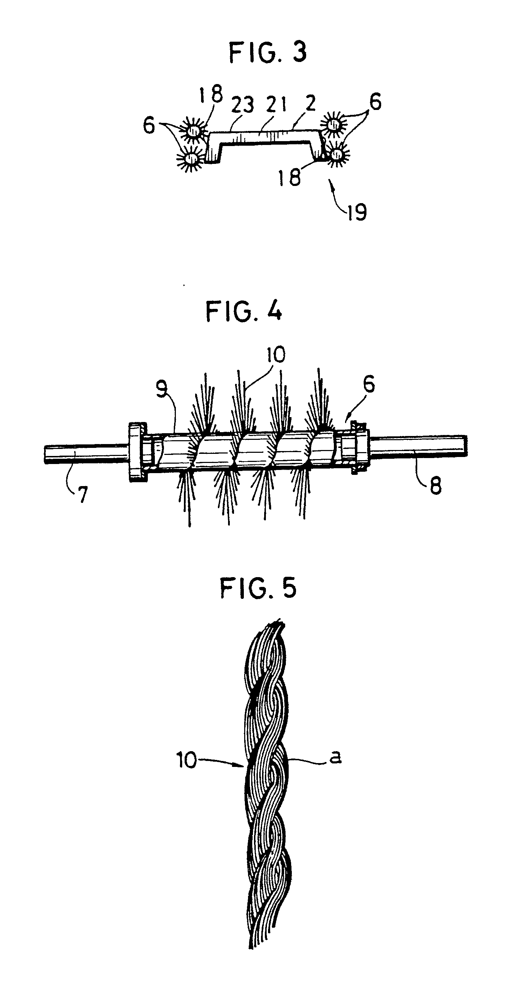

The rotary discharge electrode 6 is, as shown in FIG 4, formed as a body with a cylindrical rotary member 9 affixed between a flanged first shaft 7 and second shaft 8 which are co-axial. A large number of electrode pieces 10 are implanted on the external circumference of the rotary member 9 and project from the rotary member like a brush.

Each electrode piece 10 is not a single filament but formed into a string by plying numerous stainless steel fibres a, as shown in detail in FIG 5. A large number of electrode pieces 10 of the same length are prepared and planted at points b set in a spiral pattern on the outer circumference of the rotary member 9. The planting points b are set at definite intervals along a spiral line. Each electrode piece 10 implanted at each point b is inclined at a small angle (projection angle) in a direction along the central axis 0 of the rotary member 9 from the reference line c drawn normal to the outer circumferential surface of the rotary member 9.

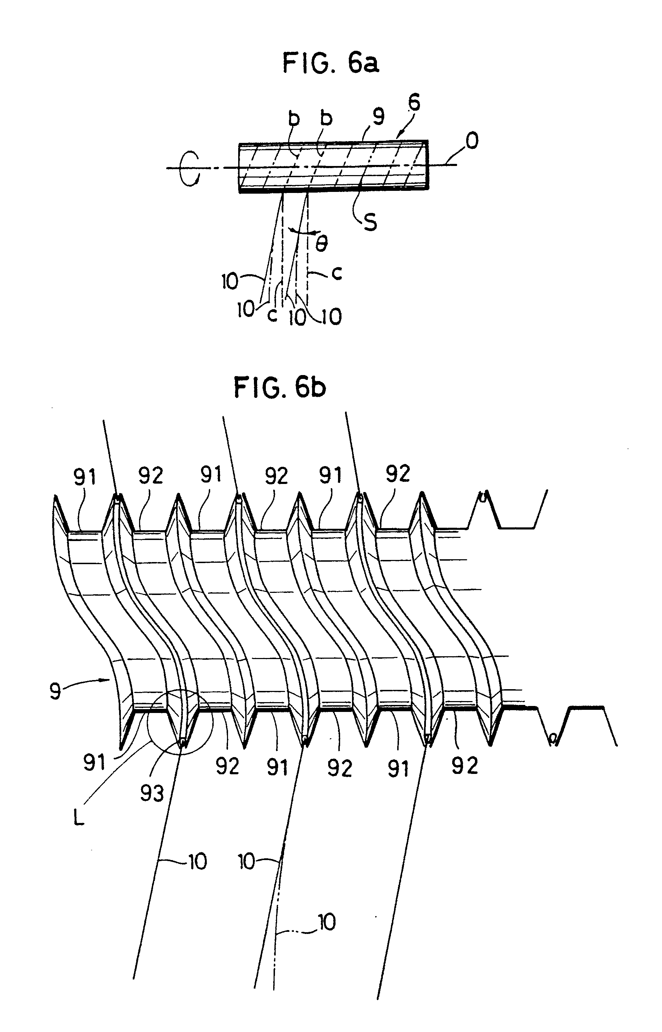

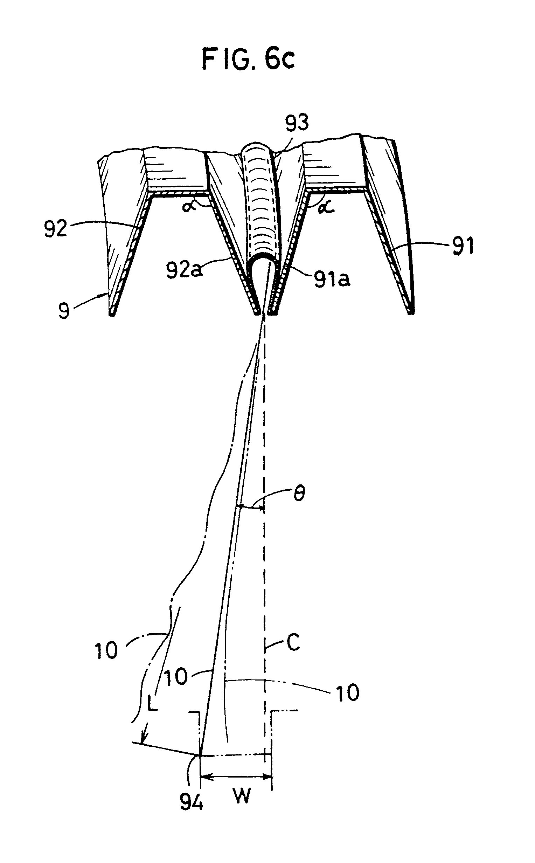

As seen from the enlarged fragmentary view of the rotary body in FIG 6(b), the rotary member 9 consists of first and second spiral member 91 and 92. The first spiral members 91 is of a spring material and is nearly rectangular channel-shaped in section with walls diverging somewhat towards its open side. The second spiral member is similar in structure to the first spiral member 91. The first and the second spiral members 91 and 92 are so combined as to form adjacent, parallel spirals by mutual engagement and held together by mutual spring forces. Between neighbouring members at each alternate position of spirals, a coil spring shaped electrode fitting member 93 of U-shaped section is inserted. Each electrode piece 10 is fixed by caulking at its root inside the U-shape groove of the electrode fitting member 93. A large number of such pieces are arranged along the length of the member 93. Each electrode piece is, as mentioned above, inclined at an angle of $\theta$ in the axial direction of the rotary member 9 from the normal reference line c extending in its radial direction which is indicated by a broken line. As the electrode piece 10 is oriented in this manner, its distal end can touch not only on the front surface of the article 2 but also on its lateral sides and, in addition, can come into proper contact with corners 94 of a recess as represented by a two dots and a dash alternating line in FIG. 6(c), or any projections, thereby enabling the surface treatment to be performed efficiently. This angle may be set larger or smaller by altering the rise angle $\alpha$ of flanges 91a and 92a of the spiral members 91 and 92. When the rotary member is not rotating, the electrode piece 10 is not straight like a piano wire as indicated by an unbroken line in FIG. 6(c), but, because it is formed by twisting fine fibres, is in a sinuous state as represented by a dot and a dash alternating line in FIG. 6(c). Alternatively its distal end may be drooping, but under the centrifugal force, as it is turned, the electrode piece 10 gradually rises up to the state as shown by the unbroken line in FIG. 6(c). If it comes under still stronger centrifugal force, it finally comes into an arcuate state as indicated by two dots and a dash alternating line after passing through this unbroken line state.

Normally, a plastic (resin) coating is applied on the electrode piece 10. To provide the plastic (resin) coating, solutions of various types of plastics (resins) which are excellent in heat resistance, wear resistance and flexibility may be used. Examples are acrylic resin, vinyl resin, polyester resin, epoxy resin, polyamide resin, polyim,ide resin, melamine resin, fluorine resin and silicone resin.

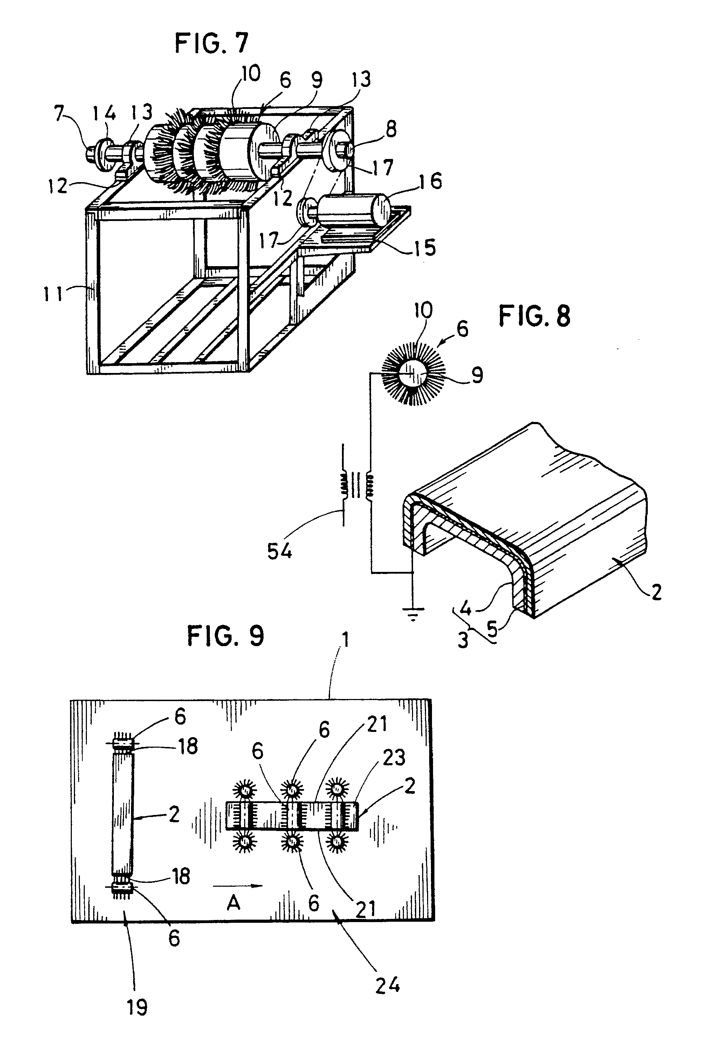

The rotary discharge electrode 6 is rotatably supported by a pair of plumber blocks 13 mounted on a supporting frame 11 with a layer of insulating material 12 (for example, bakelite or teflon) interposed therebetween, as shown in FIG. 7. On one end of the rotary discharge electrode 6, is mounted a slip ring contact 14 for providing an electric current, while on the other end, a pulley 17 is carried. This pulley 17 is belt (insulator)-driven by means of a variable speed motor 16 with an insulator 15.

The base electrode 3 and the rotary discharge electrode 6 are, as seen in FIG. 8, respectively linked to a high frequency power source 54. By applying a high voltage between the two electrodes 3 and 6, the surface of the article 2 which is brought in contact with the electrode pieces of the rotary discharge electrode 6 is subjected to a discharge treatment, thereby to be activated.

Returning now to FIGS. 1 to 3, treatment zones 19, 20 and 22 are shown. As seen in these drawings, in the treatment zone 19, the position furthest upstream in the conveying direction A, the article 2 is arranged to have its longitudinal axis transverse to the conveying direction A, and its inner side facing downward. In this treatment zone 19, the rotary discharge electrodes 6 are so installed that as they are rotated, the distal ends of the electrode pieces 10 are brought into contact with the outside surfaces 18 on both ends of the bumper. In this embodiment, 4 rotary discharge electrodes 6 are provided in the treatment zone 19, arranged in pairs, one pair at each outside surface 18 with all the rotation axes of the discharge electrodes parallel to conveying direction A. These rotary discharge electrodes 6 are in set places, as seen in the plan view, but can rise along the outside surfaces 18 of the article 2, while corona discharge is induced by the high voltage applied between them and the base electrode 3. It is also possible to have a system for raising the article 2, while the rotary discharge electrodes 6 remain stationary and cannot be raised. This treatment zone 19 is herein called the end faces treating zone.

In the treatment zone 20 downstream from the end treating zone 19 in the conveying direction A, the longitudinal axis of the article 2 is turned to lie parallel to conveying direction A, while its inner surface side is turned downward. This treatment zone 20 is herein called the sides treating zone. The turning of the article 2 may be achieved simply by mounting the article on a treatment table in the form of a turntable and turning it through a 90-degree arc. The rotary discharge electrodes 6 are arranged in opposing pairs, three on each side 21 of the article 2, with their central axial lines vertical to thereby subject both sides 21 of the article 2 to the discharge treatment. The rotary discharge electrodes 6 in this sides treating zone 20 may alternatively be installed, with the direction of the rotary central axis turned parallel to conveying direction A.

In the treatment 22 located at a position furthest downstream in the conveying direction A, the article 2 is arranged in the same orientation as in the side treatment zone 20. The rotary discharge electrodes 6 are arranged with three of them on the top surface 23 of the article 2, with their rotary central axes lying transverse to conveying direction, thereby to subject the top surface 23 of the article 2 to the discharge treatment. This treatment zone is called the top surface treatment zone.

The article 2 carried on the conveying means 1 is transferred, in turn, through the end surface treating zone 19, the sides treating zone 20 and the top treating zone 22. The outside surface 18 and 18 are subjected to the discharge treatment in the ends treatment zone 19, both side surfaces 21 and 21 are treated in the sides treating zone, and the top surface are treated in the top treating zone. In this manner, the article passes through the three treating zones 19, 20, 22 and the whole surface to be treated is activated by passing all of the rotary discharge electrodes 6.

The treating system of this embodiment is provided with conveying means for conveyance of the article, a plurality of discharge electrodes are disposed along the conveying direction of the article, each of these discharge electrodes performs activation of a part of the surface to be treated of the article so that the whole surface of the article may be completely treated when the article has passed all of these discharge electrodes. As a result, even when treating an article with many surfaces facing in different directions, treatment thereof by using corona discharge can be efficiently performed, enabling thereby mass production of surface treated products. Furthermore, since each of the plurality of discharge electrodes performs activation of a part of the surface to be treated, it is easy to perform the treatment under the condition most suitable for treating each part of the surface to be treated of the article. As a result, every part of the surface to be treated can be precisely activated.

As shown in FIG. 9, it is also acceptable to provide a zone for treating top and sides simultaneously by unifying the sides and top treatying zones in the said embodiment. Of the rotary discharge electrodes 6 in this treatment zone 24, those corresponding to both side surface 21 of the article 2 have their central axial lines held perpendicular to conveying direction A, but alternatively they may be placed parallel thereto.

In the embodiment described, the various features for improving the treatment efficiency and the treatment effect are as follows. One of the them is the projection angle $\theta$. This angle $\theta$ is so set that, as shown in FIG. 6(c), the distal end of the electrode piece 10 can be brought more surely into contact with the corner 94 of the bottom of the recess formed in the article 2. For example, when the discharge treatment is applied on a recess with a groove width W falling in the range of 10 to 55mm, using an electrode piece 10 having a length L or 100mm, it is possible to contact the corner 94 of the recess if $\theta$ falls in the range of approx. 6 - 30°, while when using an electrode piece 10 having a length L of 150mm it is possible to contact the corner 94 if $\theta$ falls in the range of approx. 5 - 20°. While other consideration are involved in selecting the angle $\theta$, if the angle is too small, the electrode pieces 10 tend to be superposed on each other and then become entangled, resulting in reduced treatment efficiency. If $\theta$ is too large, the treatment effect will decline. The implanting density of the electrode pieces 10 should be varied according to the composition of the electrode pieces 10 themselves. When the discharge treatment is executed with electrode pieces 10 at densities of 2, 4, 10, 20 and 40 pieces per unit length respectively, it is found that irregular treatment may occur at the implanting densities of 2 and 4 pieces/cm, but if the implanting density is higher than 20 pieces/cm, a problem arises in that the electrode pieces 10 become mutually entangled, interfering with adequate discharge treatment of such narrow areas as the corners 94 of the recessed part. Empirically, an implanting density of about 10 pieces/cm appears to be optimum for efficient execution of discharge treatment.

It is also necessary so to set the distal ends of the electrode pieces 10 that they will come in contact thoroughly all over the surface of the article 2. This factor is largely determined by the spiral pitch between the electrode pieces 10 that are adjacent each other in the axial direction of the rotary member 9. As described above, the discharge treatment was executed, with the projection angles $\theta$ set at 5 - 30°, respectively, using 2 types of electrode pieces 10 having lengths of 100mm and 150mm. It has, then, turned out that if electrode pieces 10 having L at 100mm is set at 5° for $\theta$, the overlap of the respective effective treating ranges d and d becomes 0, when the pitch is of the order of 13mm; and if the length L is 150mm and $\theta$, 30°, the overlap disappears at a pitch of the order of 50mm. Accordingly, complete discharge treating will be effected at a range of pitches P of 13 - 50mm, but if the pitch is too narrow, mutual entanglement of electrode pieces 10 will occur, resulting in reduced treatment effect. Too large a pitch P has been found to lead to lowered treatment efficiency due to vacant space.

5

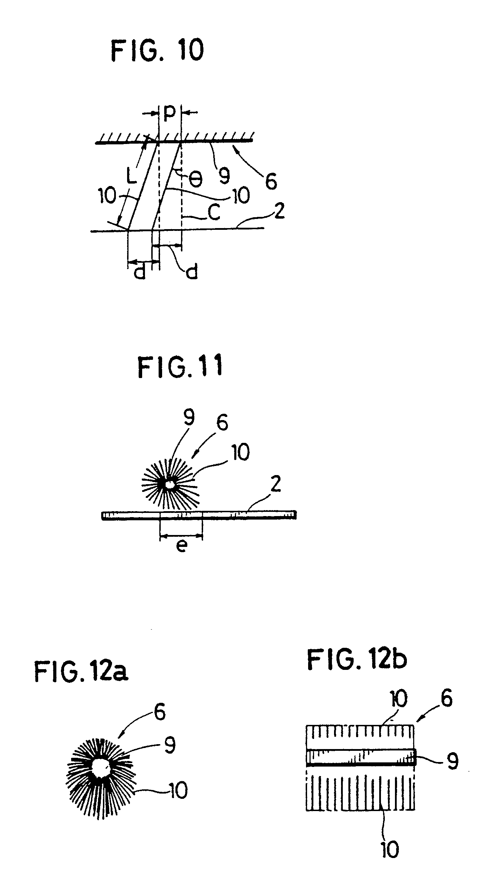

The effective treatment ranges d and d are taken in the direction transverse to the direction of movement of the electrode pieces 10, on the surface being treated, that is, parallel to the longitudinal direction of the rotary member 9. However evaluation needs to be made on the effective treatment range e along the turning direction, that is, transverse to the axis of rotation, as seen in FIG. 11. The following discharge electrode 6 was used. Each has its electrode pieces implanted, with its $\theta$ at approx. $10°$, spiral pitch P of 40mm, and its implanting density at 10 pieces/cm and with their lengths gradually increased from 100mm to 150mm in the half circle in the circumferential direction, but their lengths conversely gradually shortened from 150mm to 100mm in the remaining half circle. As seen in FIG. 10, the rotational centre was set at a height of 100mm from the article 2 which was a PP plate and the discharge treatment was performed, with the speed of revolution set at 100 rpm and the applied voltage at 24kV. In this instance, the effective treatment ranges e in which a peel strength higher than 1,000 g/cm was achieved in treating times of 15 sec. and 30 sec. were 20mm and 90mm, respectively. When similar treatment was performed in a treating time of 15 sec. using electrode pieces all having a uniform length, the effective treatment range e in which a peel strength higher than 1,000 g/cm was obtained was 60mm. These facts suggest that in order to reduce the treatment time (raising the treatment efficiency), it is desirable to have a plurality of electrodes arranged in rows; for example, in the case of the bumper, a maximum treating efficiency has been found obtainable by arranging 30 rotary discharge electrodes, if the bumper's longitudinal length is 1,800mm.

There is also a desirable range of the speed of revolution for effective treatment. In case the speed of revolution is too low, the centrifugal force is small, resulting in poor penetration into the recessed part of the article 2. But if it is too high, there is a possibility of damaging the article 2 by excessively strong contact with the article 2. Consequently, the speed of revolution generally should desirably be set at about 30 - 300 rpm.

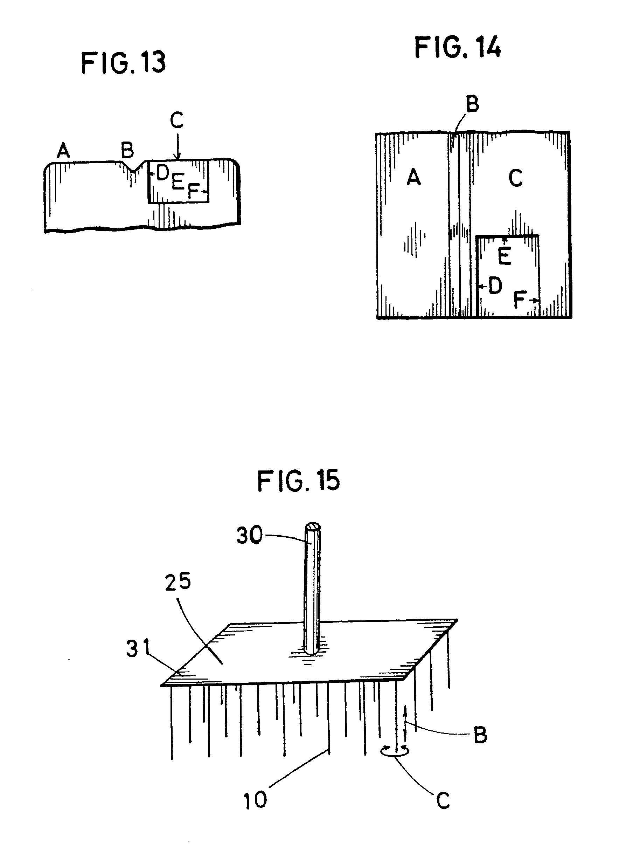

Electrode pieces differing in length should desirably be combined and implanted, such that, as seen in FIGS. 12(a) and (b), they are successively lengthened, as they advance along the spiral over a half circle, but shorten to their former length in the following half circle. In that way, entanglement is less involved and the number of electrode pieces whose distal ends are put in contact with the surface of the article are equalized, even though there are some differences in the distance between the electrode member and the article. FIGS. 13 and 14 show respective parts A - F of the article being a bumper for test, FIG. 13 showing a side view transverse to the longitudinal direction of the bumper, and FIG. 14 a plan view of the same. The part A represents a first flat surface being one side of the top; the part B, a groove; the part C, a second flat surface, the other side of the top; the part D, a first face of the recess; the part E, a second face adjacent to the part D; and the part F, a third face facing the part D. With regard to these parts A to F, using a first discharge electrode I having electrode pieces equal in length implanted therein and a second discharge electrode II having implanted therein electrode pieces whose lengths are successively lengthened in a first half circle and successively shortened in the remaining half circle, the differences in the peel strength were measured under the conditions of a voltage of 25kV and a treating time of 15 sec. The results are as shown in Table 1:

Table 1

|  | A | B | C | D | E | F |
|---|---|---|---|---|---|---|
| I | 500 | 900 | 1050 | 230 | 200 ∿ 1000 | 300 ∿ 750 |
| II | 1170 | 1300 | 1200 | 1050 | 1000 < | 800 < |

The results of the measurements, as seen in this table, suggest that larger peel strength at complex parts D, E and F can be obtained by using the second discharge electrode II.

As some of the treating electrode, a suspended discharge electrode 25 as shown in FIG. 15 may be used in place of the rotary discharge electrode. As shown in this figure, this suspended discharge electrode 25 is equipped with a supporting rod 30 and an electrode piece fitting member 31. The supporting rod 30 extends downward from the supporting frame (not shown in this figure) and is adapted for level adjustment. The electrode piece fitting member 31 is made of a conductive material formed into a square plate. A large number of electrode pieces 10 are suspended from this electrode piece fitting member 31. They are aligned in lateral and longitudinal rows, when seen from below. The electrode pieces 10 used here are similar to those of the rotary discharge electrode described above, their lengths are all equal. Each of these suspended discharge electrodes 25 performs activation of a part of the surface to be treated.

The suspended discharge electrode 25 is designed to be a vibrating type, which, as shown in FIG. 15, is moved vertically through the electrode piece fitting member 31, as shown by an arrow B, and in the

6

horizontal (rotating) direction, as indicated by an arrow C.

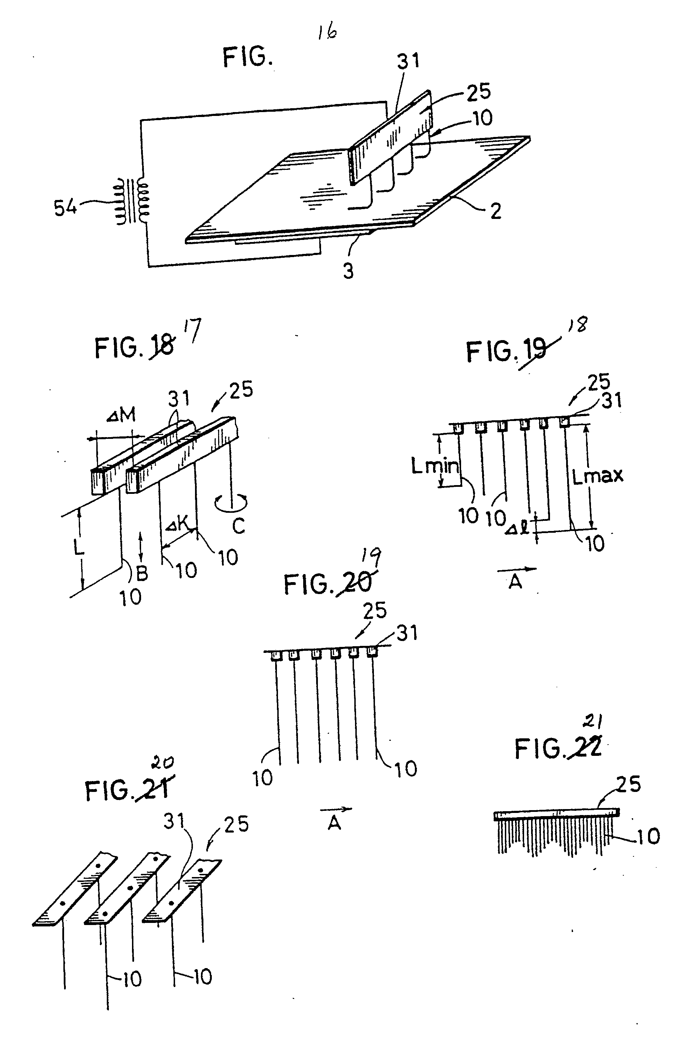

FIG. 17 is a schematic view of this vibration system. In this system, the up - down amplitude is set in a range of 0 - 150mm, for example, to match the step from the flat part to the recessed part of the top 23 of a bumper, being the article 2, whereby the distal end of the electrode piece 10 can be brought into contact with not only the flat part but with the bottom of the recessed part. The speed of the up - down movement (arrow B) is set in the range of 50 - 200 reciprocations/min., but so as not to entangle electrode pieces 10. For uniform treatment, the vibration should desirably be made at as high a rate as possible. However, it has been found that as the rate approaches 200 reciprocations/min, entanglement occurs, resulting in improper access into the details of the article 2. The amplitude of the vibration (along circle, ellipse or other curves) induced by some rotational movement (arrow C) should desirably be of the order of ($\Delta K$ - 5)/2 - $\Delta K$/2 mm, where $\Delta K$ is the distance between electrode pieces. In this case, the total of each range covered by the vibration of the distal end of each electrode piece needs to be large enough to cover the overall surface of the article. For example, if the effective treating range covered by one electrode piece 10 is about ±5mm, the distance between electrode pieces 10 $\Delta$ K being smaller than 5mm obviates the need for giving any vibration. Setting $\Delta K$ so small as to cause mutual interference from large amplitudes will produce entanglement. This is undesirable. Actually, the distance should desirably be chosen in a range of about 0.1 - 50mm. However, when $\Delta K$ is smaller than 2.5mm, access into details is hindered due to entanglement. On the other hand, if $\Delta K$ is larger than 100mm, treatment will tend to be uneven. Therefore, $\Delta K$ is actually set in a range of 5 - 100mm. The distance $\Delta M$ in the direction perpendicular to the rows at the electrode piece fitting member 31 should desirably be set similarly at 2.5 -100mm. This is because if $\Delta M$ is smaller than 2.5mm, trouble due to entanglement occurs, but if $\Delta M$ is larger than 100mm, uneven treatment will result as is the case with the said $\Delta K$. In current practice, it is set at 10mm. The speed of vibration due to rotational movement should be set to up to the order of 360 rpm. The length L of the electrode piece 10 should desirably be set in a range of 50 - 300mm. The length L, of course, needs to be longer than the step (level difference) between the top-most surface of the bumper and the bottom of its recessed part. Actually, since the length corresponding to that step is on the order of 50 - 100mm, it should be well covered in setting the range as specified hereabove. In practice, it is set at 150mm.

The arrangement for providing vibration of electrode pieces will ensure a uniform discharge treatment effect not only on the flat part but also on the recessed part or any details, which leads to high quantity productivity.

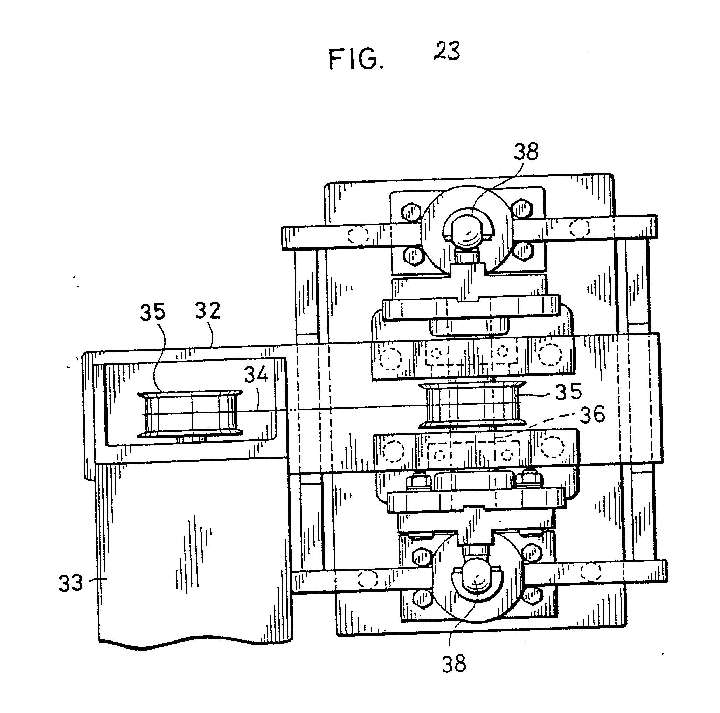

A vibrator as shown in FIGS. 22 and 23 can be used to provide such a vibration. The drive from the motor 33 installed on the supporting frame 32 is coupled to a shaft 36 through belt 34 and a pulley 35. It is, then, transmitted to an eccentric vibrating pin 37 through rotation of the shaft 36, and the movement of the vibrating pin 37 is passed to shaft 39 which slides vertically through a link ball 38 and makes the shaft 39 vibrate vertically, while the horizontal movement (rotation) is produced from the link ball 38 through or by means of a sleeve 40 with a connector and bottom link balls 41.

The electrode pieces 10 may be so arranged as to be increased in length by successive steps of $\Delta l$ in conveying direction A, as seen in FIG. 18. If the depth of the recessed part of the article 2 is, for example, 50mm, the recessed part of treating may be performed by setting the minimum length Lmin. of the electrode piece at 90mm and the maximum length Lmax. at 140mm, the minimum value plus the recess depth of 50mm. A peel strength of higher than 1,000 g/cm was obtained by a treatment with a voltage of 24kV applied for approx. 5 sec/cm, using electrode pieces successively lengthened in conveying direction A, as seen in this figure, with the longitudinal distance $\Delta M$ as indicated in FIG. 17 set at 5mm and $\Delta l$ as given in FIG. 18 at 0.1 - 2.0mm. This result was for the flat part of the article. For the recessed part also, a uniform treatment was achieved to a peel strength of about 1,000 g/cm under the same conditions. When electrode pieces 10 have a constant length, as shown in FIG. 19, access to the recessed part is not satisfactory, sometimes resulting in a peel strength lower than 200 g/cm in some details of the article. This suggests that the discharge treatment effect may be further enhanced by the arrangement shown in FIG. 18.

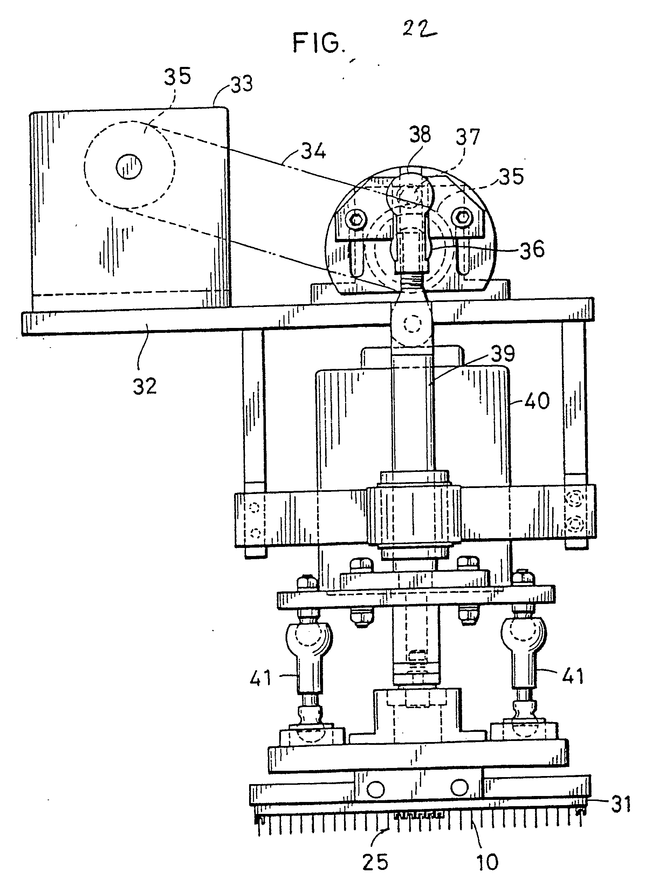

It should be noted that when arranging electrode piece lengths to change in successive steps as above-described, they may be set either to successively decrease or increase their lengths in conveying direction. The electrode pieces with their lengths differing by steps of $\Delta l$ as defined above may be arranged at random along their rows. Alternatively, as shown in FIG. 20, the electrode pieces may be arranged in a zigzag manner in the direction transverse to the conveying direction or, as shown in FIG. 21, such that the configuration formed as a whole by respective distal end of the electrode pieces may be wavy or serrated, the lengths of the electrode pieces changing from short to long and then to short again.

Sometimes when a suspended discharge electrode 25 provided with wavy electrode pieces 10 as shown in FIG. 21 is used, the electrode may be made to execute a small reciprocating motion horizontally in a direction transverse to the conveying direction A of FIG. 15. In this case, the amplitude of movement in one direction of travel may be set at 1 pitch (for example, the distance between peak and peak of the wave) or at a half pitch (for example, the distance between peak and trough of the wave). In such an arrangement, the discharge electrode 25 is moving while the article 2 passes below it. In this way, all electrode pieces 10 of the wavy discharge electrode, long and short alike, may make exact contact with the corresponding contour of the article 2. The suspended discharge electrode 25 may have nearly the same length as the length of the article 2 in the longitudinal direction or it may have a length which is a fraction of the length of the article 2 in the longitudinal direction to reduce manufacturing and power costs. In the latter case, reciprocal motion of the discharge electrode 25 covers nearly the total length of the article 2 along its longitudinal direction or the article 2 may reciprocally move.

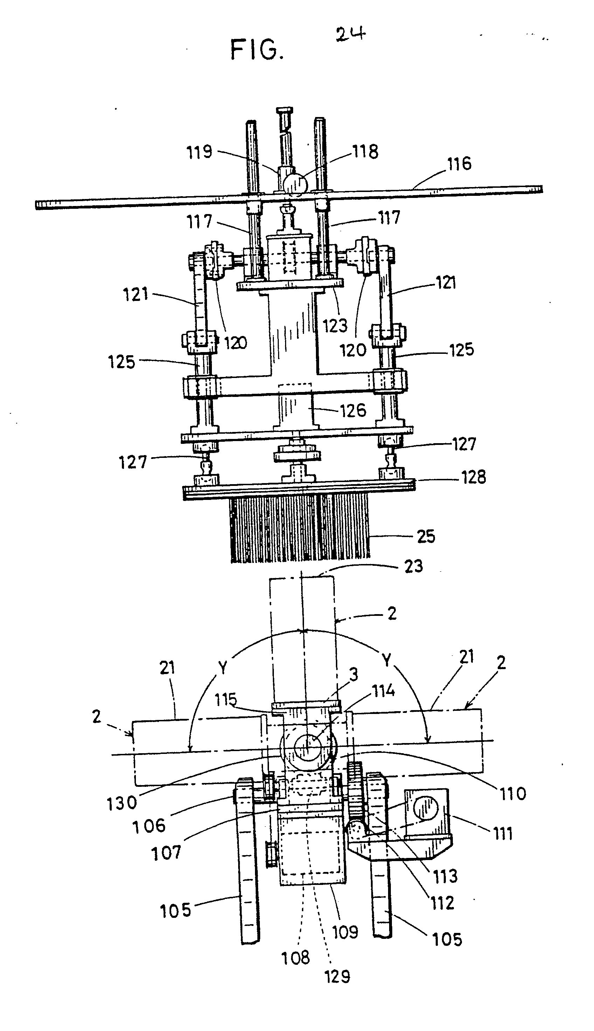

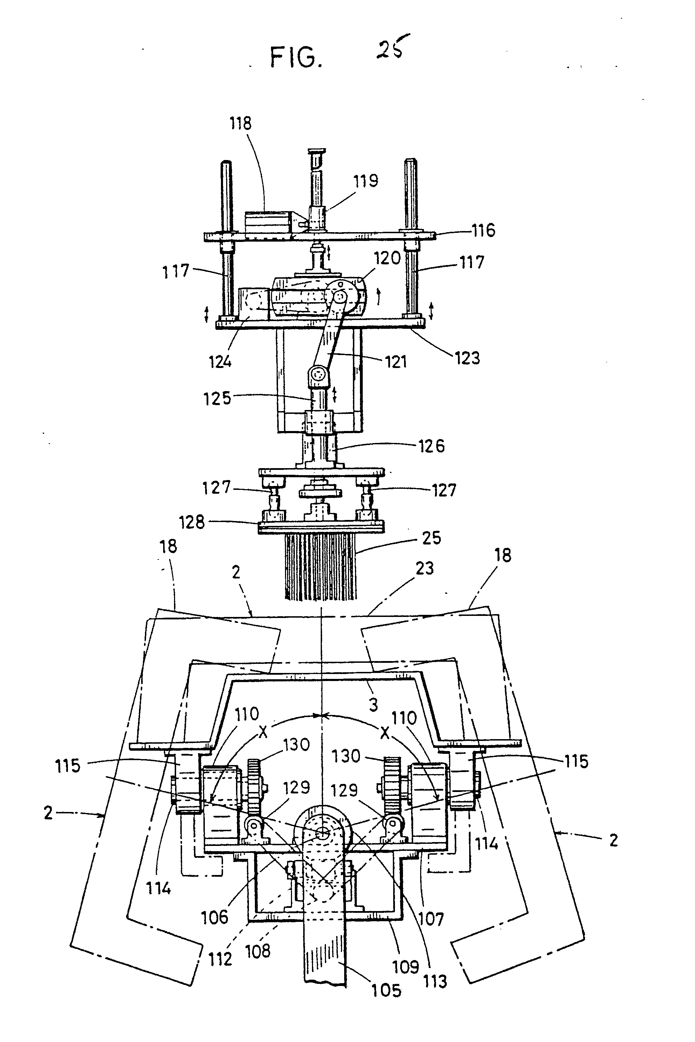

FIGS. 24 and 25 show a treating table 101 which may be used. On each treating table 101, there are provided two bearing frames 105, 105 rising therefrom. On the top of the bearing frame 105, a right - left tilting frame 107 tiltably supported by a supporting shaft 106 held parallel in conveying direction A is installed. This right - left tilting frame 107 is equipped at its bottom with a motor mounting frame 109 on which the back and forth tilting motor (with a reducer) is fixed. On either side of the upper side of the right - left tilting frame 107, bearings 110, 110 are fixed facing to each other. This tilting frame 107 is designed to tilt to both sides through an angle of X (75 degrees in the embodiment) about the axis of the supporting shaft 106. Thus, as shown in FIG. 24, when a worm 112 is rotated by a right - left tilting motor 111, a pinion 113 is turned by this worm 112, whereby the supporting shaft 106 is rotated. As a consequence, the base electrode 3 tilts, causing the article to be tilted from side to side. The article can be tilted through an angle of $150^\circ$ by this means in this embodiment. The base electrode 3 is supported by the supporting frame through supporting shaft 114 inserted in each bearing 110. A pinion 130 for back and forth tilting is mounted on the supporting shaft 114 and meshes with a worm 129 which is driven by a back and forth tilting motor 108. As the pinion 130 is turned by the worm 129, the article 2 is tilted to an angle of Y (90 degrees in the embodiment) in conveying direction A and in the reverse direction thereto, as seen in FIG. 24.

The vibrator for the discharge electrode 25 is constructed as follows. As seen in FIGS. 24 and 25, a supporting frame 123 is held on the supporting plate 116 by guide bars 117 for vertical motion. The supporting frame 123 is to be adjusted in vertical position by means of an up - down position setting jack - which is driven by an up -down position setting motor 118. Rotary arms 120 are rotated by a motor (180 rpm max) 124 for vertical movement with a reducer; this motion is transmitted by a crank bar 121 to the vertical movement shaft 125 to vibrate it vertically, whereby the discharge electrode 25 is vibrated vertically. A motor 126 for imparting swinging motion to the electrode has its rotational movement converted into a swinging movement by link balls 127, to swing the swinging part 128. By this movement, the discharge electrode 25 is vibrated horizontally. The discharge electrode 25 and the vibrator are shifted, as appropriate, in a direction transverse to conveying direction by a reciprocating device (not shown in the figure). As the vibrator, the one shown in FIGS. 22 and 23 may be used.

Alternatively, the suspended discharge electrode 25 may be constructed so as not to vibrate at all.

In the embodiment of Figs 16 to 25 a high voltage is impressed on the discharge electrode 25, while the base electrode 3 is earthed. The reason is that because of hazard from electric shock, etc., it is safer to apply high voltage to the discharge electrode 25 which is placed above. When applying high voltage to the discharge electrode, sparking or disengaging contacts may occur if the discharge electrode is vibrated or any movement for orientating the article to the discharge electrode (for example, referring to FIGS. 24 and 25, forth - back and right - left tilting movements of the base electrode and up - down movement of the discharge electrode, etc.) is made in order to activate the surface to be treated of the article. Accordingly, the movement for orientating the article to the discharge electrode (hereinafter referred to as "orientating movement") in order to activate the surface to be treated of the article should preferably be made by the base electrode only, while the discharge electrode is immovably set in place. It is also preferable to apply the vibration by the base electrode only. For example, the following movements may be considered effective as the movements for the base electrode to make.

Up - down vibration with amplitude 200 mm and at a max. speed of 100 mm/sec. Vibration by rotational movement with offsetting width 0 - 15 mm and at a velocity of 60 rpm. Rotational movement over $90^\circ$ in a plane. Tilting movement over $90^\circ$ forth - back. Up - down transfer movement with an 800 mm stroke. Right - left transfer movement with a 200 mm stroke. Forth - back transfer movement with a 100 mm stroke. Forth - back transfer movement with a 2000 mm stroke for carrying the article in and out.

However, if the vibration and the orientating movement are concentrated too much on the base electrode, there may be too great a burden being imposed on the base electrode. In such a case, it is advisable to share the orientating motion between the discharge electrode and the base electrode.

It is, of course, possible to apply high voltage to the base electrode, while earthing the discharge electrode. Alternatively, it is also permissible to let the base electrode to make a movement only along the conveying direction, and the discharge electrode to make the orientating movements in other directions.

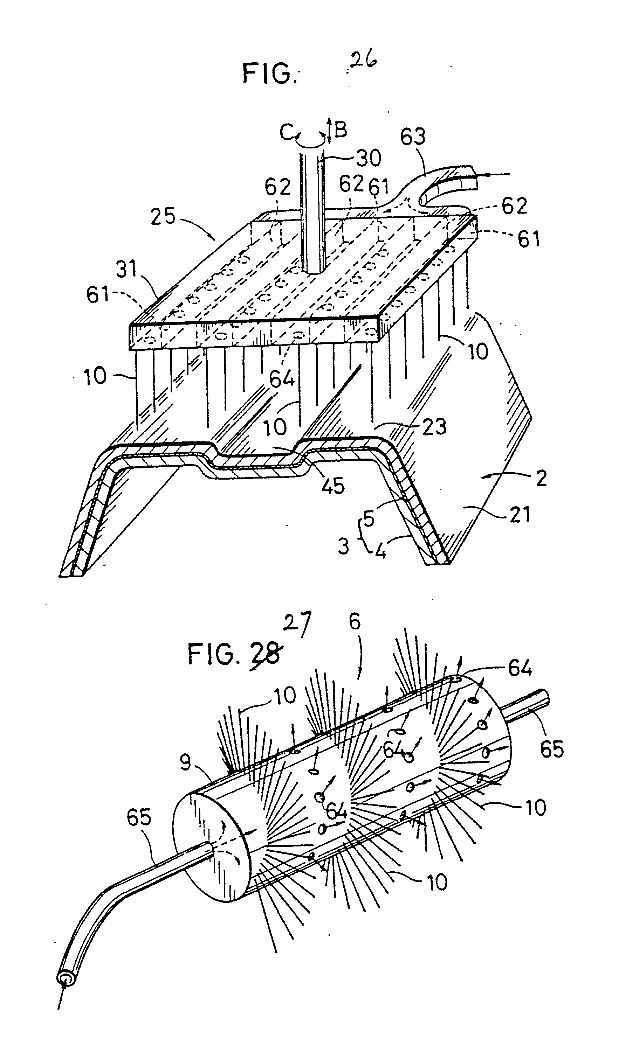

For improved treatment efficiency, an arrangement as shown in FIG. 26 may be employed. As shown in this figure, the electrode piece fitting member 31 is square in shape, as seen from above, and hollow. The hollow is divided into a plurality of rows by a plurality of parallel partition plates 62 disposed therein. These hollow parts 61 communicate with a gas inlet duct 63 connected to one side of the electrode piece fitting member 31. A gas such as, for example, air or oxygen, is blown through the inlet duct into each hollow part 61. A large number of gas outlet perforations 64 are provided in rows in the bottom of the electrode piece fitting member 31 along the length of each division of the hollow part 61. A large number of electrode pieces are held suspended from the fitting member 31 alongside of the rows of gas outlet perforation 64. The supporting shaft 30 and the electrode piece fitting member 31 are both made of a conductive material, so that by applying a high voltage through them to the base electrode 3 and the discharge electrode 25, the corona discharge is made from the distal end of the electrode pieces toward the article 2.

By blowing gas downward through the gas outlet perforations 64 via the hollow part 61 of the electrode piece fitting member 31 while making the corona discharge, the gas thus blown out is blown onto the surface of the article 2 to be treated. By this blast of gas, the activation on the treating surface is accelerated, whereby not only the surface property is effectively improved, but this improvement can be achieved with smaller consumption of power. Especially, when air or oxygen is used as the gas, the air or oxygen is not blown onto the surface of the article 2 as it is, but is turned into ozone as it passes near the electrode. Accordingly, the activation is more sufficiently attained.

If the gas is blown against the face of the article after being warmed, the treating effect is increased, leading to a reduction in treating time. Preferable temperature range is 30°C - 100°C. This effect is represented by experimental results as follows. The surface treatment was conducted for 3 sec. in a blow-out air atmosphere by applying 25kV voltage on the article. On a surface-treated polypropylene sheet, a two component system polyurethane is applied by spray-coating and the adhesiveness was evaluated by the peel strength at 180°. Results are shown in the table 2:

Table 2

| Temperature (°C) | Peel strength (g/cm) |
| --- | --- |
| -10 | 650 |
| -5 | 680 |
| 10 | 780 |
| 30 | 900 |
| 55 | 1000 |

The reason why this effect is achieved seems to result from improvement in the adhesiveness after the surface treatment due to the elevated temperature of the article as the warmed gas is blown out.

To the suspended discharge electrode, a vertical vibration in the direction of the arrow B and a rotational vibration in the direction of the arrow C may also be given. Electrode pieces of different lengths may be employed, as in arrangements shown in FIGS. 18, 20 and 21. The inlet of gas may be performed through the supporting shaft 30. This supporting shaft itself need not necessarily be conductive.

FIG. 27 illustrates a rotary type discharge electrode 6 provided with the gas outlets. This discharge electrode 6 has a hollow cylindrical rotary member 9 as the electrode piece fitting means, so that gas is blown into the inside of the rotary member 9 through the inside of the conductive rotary supporting shaft 65 attached to the centre of the end of the member. In the outer circumference of the rotary member 9, a plurality of electrode pieces 10 are implanted in a spiral. They extend in a brush shape in radial direction and, moreover, between the spiral row of the electrode pieces, gas outlet perforations 64 are also arranged in a spiral. In this assembly, the electrode pieces extend perpendicularly from the outer circumferential surface of the rotary member 9, but they may be inclined somewhat in one direction along the said supporting shaft 65. Air, nitrogen, oxygen, carbon dioxide, carbon monoxide, ammonia, nitrogen oxides, halogenated carbons, halogenated hydrocarbons, vinyl compounds, argon, helium, or other gases may be used as the gas to be blown out toward the discharge space. These gases may be used separately or two or more may be mixed for use. The same is true of the suspended discharge electrode of FIG. 26.

The electrode piece 10 is formed by plying a large number of conductive monofilaments a made of stainless steel as the stock material. As the monofilament a, an austenitic stainless steel fiber (Japanese Industrial Standard SUS 27 - 43), "NASLON", manufactured by Nippon Seisen Co., Ltd., is preferred. The number of monofilaments plied is 10 - 3,000. As the monofilaments a, those of diameters 4 - 50 or other are available. In this embodiment, 4 types having diameters $8\mu$, $10\mu$, $12\mu$ and $15\mu$, which were considered preferable, were examined. Their mechanical, electrical or other properties are as follows:

Specific gravity 7.9 g/cm$^2$

Initial tensile resistance 1900 kg/mm$^2$

Cutting strength 150 ~ 250 kg/mm$^2$

Cutting resistance 2.7 ~ 4.5 g/d

Knot strength 106 ~ 140 kg/mm$^2$

Knot resistance 1.9 ~ 2.5 g/d

Elongation percentage 1.0 ~ 2.0 %

Elastic modulus of elongation 100 ... (1.0 %)

(At the time of 3% elongation) 66 .... (1.5 %)

Water content (Standard condition) 0 %

Melting point 1400 ~ 1450 $^\circ$C

Thermal conductivity 0.039 cal/cm.sec $^\circ$C

Specific heat 0.12 cal/g. $^\circ$C

Specific electric resistance 72$\mu\Omega$ -cm

Influence of acids Stable in nitric acid and phosphoric acid Affected with sulfuric and hydrochloric acid

Influence of alkalis Unaffected

Electrode pieces 10 formed by plying 200 mono-filaments a of, for example, $12\mu\phi$ having these properties, were fitted to a suspended discharge electrode 25 installed facing downward towards a base electrode, as shown in FIG. 15. The suspended discharge electrode 25 was tested as shown in FIG.17. On a base electrode 3, is placed a flat plate shape article 2 made of PP material. Above the longitudinally oriented electrode piece fitting member 31 is installed and from this electrode fitting member 31, electrode pieces 10 formed by plying 200 monofilaments of $12\mu\phi$, for example, are suspended at equal intervals. Between the base electrode 3 and the electrode fitting member 31, a high frequency power source 54 is linked, to apply a high voltage therebetween. The article 2 and the electrode piece 10 are movable relative to each other by moving either one of them. In this way, the surface of the article 2 is subjected to the discharge treatment, for attainment of improved surface peel strength as intended. Test results obtained using the said electrode pieces 10 are as shown in the Table 3:

Table 3

| Distance between electrodes | Treating time | Peel strength | Secondary peel strength after immersion in water of 50 $^\circ$C for 10 days |
|---|---|---|---|
| 5 mm | 10 sec/cm | Not peeled | 1040 g/cm |
| 10 mm | 10 sec/cm | 1270 g/cm | 1160 g/cm |

This table suggests that distinct improvements in the peel strength may be achieved by using such electrode pieces 10. The improvements in the peel strength were similarly achieved with electrode pieces of different diameters, e.g. $8\mu\phi$ $10\mu\phi$ and $15\mu\phi$, 100, 200, 300, 1000 and 3000 of which were plied in various combinations.

When the electrode piece is composed by plying together a large number of monofilaments having very minute diameters, not fragile but not too strong and firm an electrode may be obtained. It makes a light touch on the article surface and because of its structure being composed of a large number of monofilaments, stable sure touch is realized. Accordingly, not only the discharge effect is stablilized and ensured, but both the electrode pieces and the article are free from injury. With a large number of monofilaments being merely bundled without being plied together, similar discharge effect may he achieved, but such a piece, being liable to to fluffing, is unsuitable for use as an electrode piece.

Of course, the electrode piece need not necessarily be of stainless steel.

The high voltage source for use in corona discharge treatment should desirably have a voltage of 10kV - 50kV (more preferably 10kV - 30kV) and a frequency of 1kHz - 100 kHz. The power output should be appropriately chosen to suit the object. For the power circuit, hitherto well known one may be used, but it is desirable that the discharge current which generates plasma can be arbitrarily controlled according to the load and that the frequency and the output of the high voltage source are adjustable to optimal levels. Besides, by arbitrarily setting the time for producing the high voltage output by means of a timer, the treating time should desirably be fixed. With a stabilizing power source provided in the electric circuit on which high voltage is to be applied, even surfaces or molded products with complex configurations may be subjected to uniform plasma treatment.

The corona discharge treating system is not limited to the embodiments described above. For example, in a modification of the embodiment shown in FIG. 1, both rotary discharge electrodes and suspended discharge electrodes may be used together, for example, by employing the suspended discharge electrode in the top treating zone. In the embodiment of FIGS 16 to 25, rotary discharge electrodes may be used at all stages. Regarding the treating zone, where the treatment has been described as divided into several stages, stages may alternatively be combined into a single zone. For example the top treating zone and the first end treating zone may be integrated into a single treating zone. As for a part of the surface to be treated of the article, it can be completely treated either by one discharge electrode alone or by plural discharge electrodes. That is, the plurality of discharge electrodes are arranged in the conveying direction, each of them can be directed either for treatment of different parts of the surface to be treated or for treatment of the same part by several electrodes. When using the rotary discharge electrodes, two types differing in their spiral direction may be employed or rotary electrodes identical in spiral direction may be arranged to turn in different directions. The rotary discharge electrode may have its rotational central axis set suitably inclined, rather than parallel or perpendicular to the conveying direction A. The suspended discharge electrode may have its electrode piece fitting member set obliquely. The base electrode 3 may have formed on its surface, as required, a layer of a dielectric material, for example, glass, ceramic, plastic, enamel, asbestos, marble, slate, mica. It is possible either to arrange the base electrode so as to be movable with the article or to arrange a plurality of them to be stationary along the conveying direction. In any case, it is preferable to adapt the base electrode to the configuration of the article in order to attain effective treatment.

A slender chain formed by interlocking links made of iron, brass, aluminium, or preferably stainless steel, may be used as the electrode piece used for the suspended discharge electrode. The links of the chain used may have a length of 0.2 - 10 mm in the longidutinal direction and a length of 0.1 - 5 mm in the transverse direction.

As hereabove described, the corona discharge treating system of this invention is provided with conveying means for conveying the article, a plurality of discharge electrodes are disposed in the conveying direction of the article, each of these discharge electrodes performs activation of a part of the surface to be treated of the article so that the whole surface of the article may be completely treated when the article has passed through all of these discharge electrodes. Therefore, even in the case of treating an article with many surfaces respectively facing to different directions, treatment thereof by applying corona discharge can be efficiently performed, enabling thereby mass production of surface treated products. Furthermore, since each of the plurality of discharge electrodes performs activation of a part of the surface to be treated taking over a partial surface treatment work, it becomes quite easy to carry out the treatment under the condition most preferable for treating each of the surface to be treated of the article, and as a result every part of the surface to be treated can be exactly activated.

## Claims

1. A corona discharge treating system comprising:

   a plurality of treating zones, each treating zone being provided for treating different parts of a surface of an article (2) to be treated, each treating zone having at least one discharge electrode (6); conveying means (1) for conveying articles between the treating zone; and a base electrode (3) coming in contact with the article to be treated in each treating zone, wherein high voltage is applied between said base electrode (3) and said discharge electrode (6) to perform corona discharge in each treating zone to activate a part of the surface of the article to be treated, said conveying means (1) conveying the article, whose part of the surface is activated, to a next treating zone to activate another part of the surface of the article; characterised in that at least one of the discharge electrodes is a rotary discharge electrode (9) having a large number of conductive electrode pieces (10) implanted like a brush in the outer circumference of the rotary member.

2. A corona discharge treating system according to claim 1 wherein electrode pieces (10) are implanted along a spiral pattern in the external circumference of rotary member (9), each piece being inclined at a definite angle with respect to a line rising at a right angle from the periphery of the rotary member in a direction along the axial line of the rotary member.

3. A corona discharge treating system according to claim 1 or 2 wherein the lengths of electrode pieces (10) are different.

4. A corona discharge treating system according to claim 3 wherein the electrode pieces are so arranged that their lengths are gradually lengthened over a half circle in their turning direction, but gradually shortened over the remaining half circle.

5. A corona discharge treating system according to claim 1, 2, 3 or 4 wherein suspended discharge electrodes (25) having a large number of electrode pieces (10) suspended from an electrode fitting member (31) are used in combination with rotary discharge electrodes as the discharge electrodes.

6. A corona discharge treating system according to claim 5 wherein the lengths of the electrode pieces (10) are different.

7. A corona discharge treating system according to claim 6 wherein a plurality of electrode pieces (10) are arranged in order from short to long ones.

8. A corona discharge treating system according to claim 7 wherein a plurality of electrode pieces (10) are cut at their distal ends to have a wavy or serrate pattern provided by these ends.

9. A corona discharge treating system according to any of claims 5 to 8 further comprising a vibrating means for the electrode pieces (10).

10. A corona discharge treating system according to any of claims 5 to 8 wherein the base electrode (3) is designed to vibrate.

11. A corona discharge treating system according to claim 9 to 10 wherein the directions of vibration are vertical and horizontal.

12. A corona discharge treating system according to any of claims 1 to 11 wherein the electrode piece (10) comprises a fine string by plying together a plurality of conductive metal fibres of very minute diameters.

13. A corona discharge treating system according to claim 12 wherein the metal fibre is of stainless steel.

14. A corona discharge treating system according to any of claim 1 to 13 wherein the base electrode (3) consists of a plastic moulding (4) fitted to the configuration of the article and a conductive metal layer (5) formed on its surface adjacent the article.

15. A corona discharge treating system according to any of claims 1 to 14 wherein the discharge electrodes and the base electrode share the motion for adapting the article to the discharge electrodes in order to activate the surface to be treated of the article.

16. A corona discharge treating system according to any of claims 1 to 14 wherein only the base electrode is designed to make the motion for adapting the article to the discharge electrodes, while the discharge electrodes are immovably set in place, in order to activate the surface to be treated of the article.

17. A corona discharge treating system according to any of claims 1 to 16 comprising means for directing a gas to the surface of said article.

18. A corona discharge treating system according to claim 17 wherein the gas is blown after being warmed.

19. A corona discharge treating system according to claims 17 or 18 wherein gas is air or oxygen.

**Revendications**

1. Dispositif de traitement par décharge par effet corona comprenant : plusieurs zones de traitement, chaque zone de traitement étant prévue pour traiter différentes parties d'une surface d'un objet à traiter (2), chaque zone de traitement ayant au moins une électrode de décharge (6) ; un appareil de transport (1), pour transporter des objets entre les zones de traitement ; et une électrode de base (3) venant en contact avec l'objet à traiter dans chaque zone de traitement, dans lequel une haute tension est appliquée entre ladite électrode de base (3) et l'électrode de décharge (6) pour effectuer une décharge par effet corona dans chaque zone de traitement pour activer une partie de la surface de l'objet à traiter, l'appareil de transport (1) transportant l'objet, dont une partie de la surface est activée, vers une zone de traitement suivante pour activer une autre partie de la surface de cet objet, caractérisé en ce qu'au moins l'une des électrodes de décharge est une électrode rotative (9) un grand nombre d'éléments conducteurs (10) formant électrodes étant implantés à la manière d'une brosse dans la circonférence externe de l'organe rotatif.

2. Dispositif de traitement par décharge par effet corona suivant la revendication 1, dans lequel des éléments (10) formant électrodes sont implantés suivant un dessin en spirale dans la circonférence externe de l'organe rotatif (9), chaque élément étant incliné d'un angle défini par rapport à une droite s'élevant à angle droit depuis la périphérie de l'organe rotatif, dans la direction de l'axe de l'organe rotatif.

3. Dispositif de traitement par décharge par effet corona suivant la revendication 1 ou 2, dans lequel les longueurs des éléments (10) formant électrodes sont différentes.

4. Dispositif de traitement par décharge par effet corona suivant la revendication 3, dans lequel les éléments formant électrodes sont agencés de manière que leurs longueurs soient progressivement croissantes sur un demi-cercle dans leur sens de rotation, mais progressivement raccourcies sur le demi-cercle restant.

5. Dispositif de traitement par décharge par effet corona suivant la revendication 1, 2, 3 ou 4, dans lequel on utilise des électrodes de décharge suspendues (25) comportant un grand nombre d'éléments (10) formant électrodes suspendus à une pièce (31) de montage d'électrodes, en combinaison avec des électrodes rotatives de décharge, en tant qu'électrodes de décharge.

6. Dispositif de traitement par décharge par effet corona suivant la revendication 5, dans lequel les longueurs des éléments (10) formant électrodes sont différentes.

7. Dispositif de traitement par décharge par effet corona suivant la revendication 6, dans lequel plusieurs éléments (10) formant électrodes sont agencés en ordre, à partir d'éléments courts jusqu'à des éléments longs.

8. Dispositif de traitement par décharge par effet corona suivant la revendication 7, dans lequel plusieurs éléments (10) formant électrodes sont coupés à leur extrémité distale pour qu'une surface de forme ondulée ou cannelée soit constituée par ces extrémités.

9. Dispositif de traitement par décharge par effet corona suivant l'une quelconque des revendications 5 à 8, comprenant en outre des moyens pour faire vibrer les éléments (10) formant électrodes.

10. Dispositif de traitement par décharge par effet corona suivant l'une quelconque des revendications 5 à 8, dans lequel l'électrode de base (3) est conçue pour vibrer.

11. Dispositif de traitement par décharge par effet corona suivant la revendication 9 ou 10, dans lequel les directions des vibrations sont verticales et horizontales.

12. Dispositif de traitement par décharge par effet corona suivant l'une quelconque des revendications 1 à 11, dans lequel les éléments (10) formant électrodes sont constitués par un mince cordon obtenu en assemblant ensemble plusieurs libres métalliques conductrices de diamètre extrêmement fin.

13. Dispositif de traitement par décharge par effet corona suivant la revendication 12, dans lequel la fibre de métal est de l'acier inoxydable.

14. Dispositif de traitement par décharge par effet corona suivant l'une quelconque des revendications 1 à 13, dans lequel l'électrode de base (3) consiste en un moulage de matière plastique (4) ajusté à la configuration de l'objet, et en une couche (5) de métal conducteur formée sur sa surface adjacente à l'objet.

15. Dispositif de traitement par décharge par effet corona suivant l'une quelconque des revendications 1 à 14, dans lequel les électrodes de décharge et l'électrode de base se partagent le mouvement pour adapter l'objet aux électrodes de décharge afin d'activer la surface de l'objet qui doit être traitée.

16. Dispositif de traitement par décharge par effet corona suivant l'une quelconque des revendications 1 à 15, dans lequel seule l'électrode de base est conçue pour effectuer le mouvement pour adapter l'objet aux électrodes de décharge, tandis que les électrodes de décharge sont disposées en place de manière immobile afin d'activer la surface de l'objet qui doit être traitée.

17. Dispositif de traitement par décharge par effet corona suivant l'une quelconque des revendications 1 à 16, comprenant des moyens pour diriger un gaz sur la surface dudit objet.

18. Dispositif de traitement par décharge par effet corona suivant la revendication 17, dans lequel le gaz est soufflé après avoir été chauffé.

19. Dispositif de traitement par décharge par effet corona suivant la revendication 17 ou 18, dans lequel le gaz est de l'oxygène de l'air.

**Patentansprüche**

1. Koronarentladungs- und Behandlungssystem das aufweist:

   - mehrere von Behandlungszonen, wobei jede Behandlungszone zum Behandeln von verschiedenen Anteilen einer Oberfläche eines Gegenstandes ausgebildet ist und jede Behandlungszone wenigstens eine Entladungselektrode (6) aufweist;
   - Transporteinrichtungen (1) zum Transport der Gegenstände zwischen den Behandlungszonen; und
   - eine Basiselektrode (3), die in Kontakt mit dem zu behandelnden Gegenstand in jeder Behandlungszone kommt, wobei Hochspannung zwischen der Basiselektrode und der Entladungselektrode (6) zugeführt wird, um Koronarentladungen zum Aktivieren eines Anteils der Oberfläche des zu behandelnden Gegenstandes in jeder Behandlungszone auszuführen und wobei die Transporteinrichtungen den Gegenstand, dessen Anteil der Oberfläche aktiviert ist, zu einer nächsten Behandlungszone transportieren, um einen anderen Anteil der Oberfläche des Gegenstandes zu aktivieren,
   dadurch gekennzeichnet,
   daß wenigstens eine der Entladungselektroden eine Drehentladungselektrode (9) ist, die eine große Anzahl von leitfähigen Elektrodenstücken (10) aufweist, die wie eine Bürste in dem äußeren Umfang des Drehteils implantiert sind.

2. Koronarentladungs- und Behandlungssystem nach Anspruch 1, dadurch gekennzeichnet, daß die Elektrodenstücke (10) entlang einem Spiralmuster in dem äußeren Umfang des Drehteils (9) implantiert sind, wobei jedes Stück bezogen auf eine Linie, die sich im rechten Winkel von dem Umfang des Drehteils in eine Richtung entlang der Axiallinie des Drehteils erstreckt, mit einem bestimmten Winkel geneigt ist.

3. Koronarentladungs- und Behandlungssystem nach Anspruch 1 oder 2, dadurch gekennzeichnet, daß die Längen der Elektrodenstücke (10) verschieden sind.

4. Koronarentladungs- und Behandlungssystem nach Anspruch 3, dadurch gekennzeichnet, daß die Elektrodenstücke so angeordnet sind, daß ihre Längen graduell über einen halben Kreis in ihrer Drehrichtung verlängert, jedoch über den verbleibenden halben Kreis graduell verkürzt sind.

5. Koronarentladungs- und Behandlungssystem nach Anspruch 1, 2, 3 oder 4, dadurch gekennzeichnet, daß herunterhängende Entladungselektroden (25) mit einer großen Anzahl von Elektrodenstücken (10), die von einem Elektrodenbefestigungsteil (31) herunterhängen, in Kombination mit den Drehentladungselektroden als Entladungselektroden verwendet werden.

6. Koronarentladungs- und Behandlungssystem nach Anspruch 5, dadurch gekennzeichnet, daß die Längen der Elektrodenstücke (10) verschieden sind.

7. Koronarentladungs- und Behandlungssystem nach Anspruch 6, dadurch gekennzeichnet, daß mehrere von Elektrodenstükken (10) in den Reihenfolge von kurz nach lang angeordnet sind.

8. Koronarentladungs- und Behandlungssystem nach Anspruch 7, dadurch gekennzeichnet, daß mehrere von Elektrodenstükken (10) an ihren vorderen Enden geschnitten sind, um ein wellenförmiges oder sägezahnartiges Muster an diesen Enden auszubilden.

9. Koronarentladungs- und Behandlungssystem nach einem der Ansprüche 5-8, dadurch gekennzeichnet, daß weiter Vibrationseinrichtungen für die Elektroden (10) vorgesehen sind.

10. Koronarentladungs- und Behandlungssystem nach einem der Ansprüche 5-8, dadurch gekennzeichnet, daß die Basiselektrode (3) vibrierbar konstruiert ist.

11. Koronarentladungs- und Behandlungssystem nach Anspruch 9-10, dadurch gekennzeichnet, daß die Richtungen der Vibration vertikal und horizontal sind.

12. Koronarentladungs- und Behandlungssystem nach einem der Ansprüche 1-11, dadurch gekennzeichnet, daß das Elektrodenstück (10) eine feine Kette durch Zusammenfassen von mehreren leitfähigen Metallfasern von sehr kleinem Durchmesser aufweist.

13. Koronarentladungs- und Behandlungssystem nach Anspruch 12, dadurch gekennzeichnet, daß die Metallfaser aus rostfreiem Stahl besteht.

14. Koronarentladungs- und Behandlungssystem nach einem der Ansprüche 1-13, dadurch gekennzeichnet, daß die Basiselektrode (3) aus einem Plastikformteil (4) besteht, das an die Konfiguration des Gegenstandes angepaßt ist und eine leitfähige Metallschicht (5) aufweist, die an ihrer Oberfläche angrenzend an den Gegenstand ausgebildet ist.

15. Koronarentladungs- und Behandlungssystem nach einem der Ansprüche 1-14, dadurch gekennzeichnet, daß die Entladungselektroden und die Basiselektrode an der Bewegung zum Anpassen des Gegenstandes an die Entladungselektroden teilnehmen, um die Oberfläche des zu behandelnden Gegenstandes zu aktivieren.

16. Koronarentladungs- und Behandlungssystem nach einem der Ansprüche 1-14, dadurch gekennzeichnet, daß nur die Basiselektrode dafür ausgelegt ist, die Bewegung zum Anpassen des Gegenstandes an die Entladungselektroden auszuführen, während die Entladungselektroden unbeweglich in Position gehalten werden, um die Oberfläche des zu behandelnden Gegenstandes zu aktivieren.

17. Koronarentladungs- und Behandlungssystem nach einem der Ansprüche 1-16, dadurch gekennzeichnet, daß Einrichtungen zum Ausrichten eines Gases auf die Oberfläche des Gegenstandes vorgesehen sind.

18. Koronarentladungs- und Behandlungssystem nach Anspruch 17, dadurch gekennzeichnet, daß das Gas nach Erwärmen eingeblasen wird.

19. Koronarentladungs- und Behandlungssystem nach Anspruch 17 oder 18, dadurch gekennzeichnet, daß das Gas Luft oder Sauerstoff ist.

FIG. 1

FIG. 2

# FIG. 3

# FIG. 4

# FIG. 5

# FIG. 6a

# FIG. 6b

# FIG. 6c

FIG. 7

FIG. 8

FIG. 9

# FIG. 10

# FIG.11

# FIG.12a

# FIG.12b

FIG. 13

FIG. 14

FIG. 15

FIG. 16

FIG. 18

FIG. 19

FIG. 20

FIG. 21

FIG. 22

FIG. 22

FIG. 23

## FIG. 24

EP 0 228 247 B1

FIG. 25

FIG. 26

FIG. 28